# DEMANDE DE BREVET EUROPEEN

(11) **EP 2 259 029 A1**
(43) Date de publication de la demande: **08.12.2010**
(21) Numéro de dépôt: 09305507.7
(22) Date de dépôt: 03.06.2009
(51) Int. Cl.: G01F 15/14

(54) **Bâche en matière plastique pour compteur de fluide**

(71) Demandeur: Itron France, 92100 Boulogne-Billancourt (FR)
(72) Inventeur: Chaudy, Alain, 71000, MACON (FR); Catherin, Daniel, 01570, MANZIAT (FR); Bouzid, Tarek, 71000, MACON (FR)
(74) Mandataire: Lenne, Laurence

(57) **Abrégé**

L'invention concerne une bâche (1) destinée à contenir un dispositif de mesure d'un compteur de fluide, en particulier d'eau, dont la sortie ou l'entrée de fluide est réalisée au moyen d'un canal (3) connecté directement latéralement à l'intérieur de la bâche puis dévié vers le bas en une forme de U (3A) pour être finalement vertical et coaxial à la bâche.

Selon l'invention, la bâche est en matière plastique et constituée d'une première (1A) et d'une seconde (1B) parties assemblées après moulage.

## Description

L'invention concerne une bâche en matière plastique destinée à contenir un dispositif de mesure d'un compteur de fluide, en particulier d'eau.

Sur cette bâche est disposé le totalisateur du compteur comportant divers éléments dont le dispositif de comptage du débit de fluide relié mécaniquement ou magnétiquement par exemple au dispositif de mesure.

L'invention concerne plus précisément une bâche de type concentrique telle que la bâche standardisée sous la norme européenne EN-14154.

Cette bâche est connectée à une conduite inférieure et son entrée d'eau est réalisée au moyen d'un canal annulaire connecté à un canal vertical latéral débouchant dans le fond de la bâche. Sa sortie d'eau est quant à elle réalisée au moyen d'un canal connecté directement latéralement à l'intérieur de la bâche puis dévié vers le bas en une forme de U pour être finalement vertical et coaxial à la bâche.

Cette forme de U du canal crée une protubérance latérale sur la bâche et il est connu de réaliser une telle bâche en laiton.

L'objet de l'invention est de réaliser une telle bâche en matière plastique en général composite. Du fait de cette protubérance latérale, il s'avère impossible de mouler la bâche d'une seule pièce suite à la contre dépouille qui en résulte.

L'invention résout ce problème et pour ce faire elle concerne une bâche destinée à contenir un dispositif de mesure d'un compteur de fluide, en particulier d'eau, dont la sortie ou l'entrée de fluide est réalisée au moyen d'un canal connecté directement latéralement à l'intérieur de la bâche puis dévié vers le bas en une forme de U pour être finalement vertical et coaxial à la bâche, **caractérisée en ce qu**'elle est en matière plastique et constituée d'une première et d'une seconde parties assemblées après moulage.

Selon un mode de réalisation préféré, ladite seconde partie forme la base de ladite forme de U du canal et est assemblée à ladite première partie constituant le reste de la bâche.

La première partie constituant la majeure partie de la bâche ne comporte ainsi aucune contre dépouille et peut être aisément moulé.

De préférence, ladite seconde partie est constituée d'un bouchon de forme circulaire fermant ladite base de la forme en U du canal.

Avantageusement, ledit bouchon est taraudé et est vissé sur un filetage correspondant réalisé sur ladite première partie.

L'invention est décrite ci-après plus en détail à l'aide de figures ne représentant qu'un mode de réalisation préféré de l'invention.

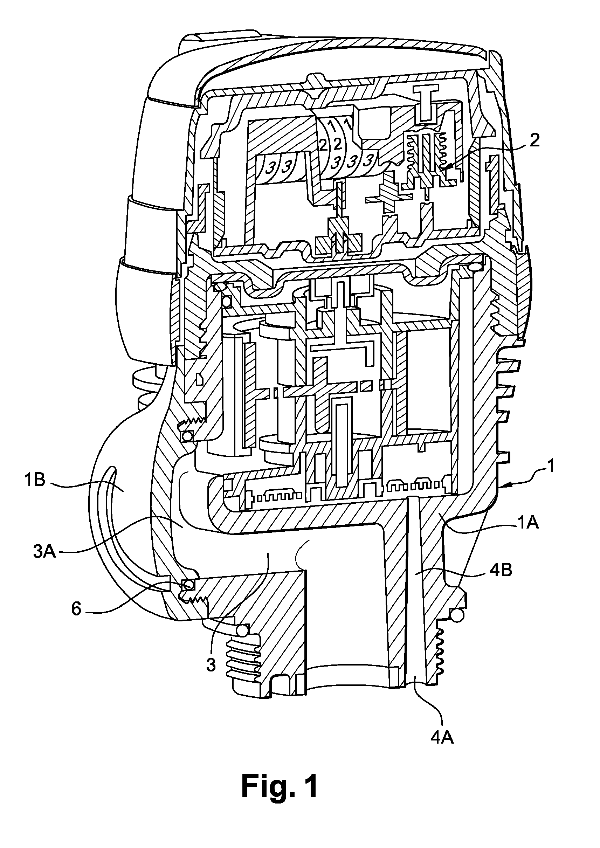

La figure 1 est une vue en perspective et en coupe verticale d'un compteur équipé d'une bâche conforme à l'invention.

La figure 2 est une vue de détail de cette vue en coupe verticale.

Un compteur de fluide, en particulier d'eau, comporte une bâche 1 contenant un dispositif de mesure, ici un système à piston oscillant, et est surmontée d'un totalisateur 2 comportant entre autres le dispositif de comptage du débit d'eau consommée.

La bâche 1 est de type concentrique et sa sortie de fluide est réalisée au moyen d'un canal 3 connecté directement latéralement à l'intérieur de la bâche puis dévié vers le bas en une forme de U 3A pour être finalement vertical et coaxial à la bâche. Son entrée d'eau est réalisée quant à elle au moyen d'un canal annulaire 4A connecté à un canal vertical 4B latéral débouchant dans le fond de la bâche.

Il est possible selon le dispositif de mesure utilisé d'inverser entrée et sortie de la bâche. En d'autres termes, le canal 3 peut également constituer l'entrée d'eau et le canal annulaire 4A et le canal vertical 4B constituer la sortie de la bâche.

Selon l'invention, la bâche 1 est en matière plastique et constituée d'une première et d'une seconde parties assemblées après moulage.

La seconde partie latérale 1B forme la base de ladite forme de U du canal et est constituée d'un bouchon de forme circulaire en matière plastique et fermant la base de la forme en U 3A du canal. Ce bouchon 1A est taraudé et est vissé sur un filetage 5 correspondant réalisé sur la première partie 1A constituant le reste de la bâche.

Un joint d'étanchéité 6 est intercalé entre le bouchon 1B et la première partie 1A, afin d'assurer l'étanchéité après vissage du bouchon.

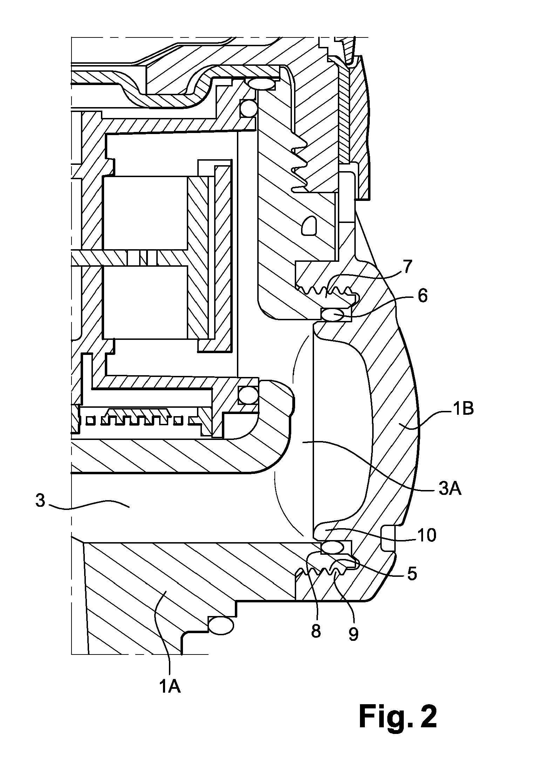

Comme particulièrement visible sur la figure 2, le filetage 5 est réalisé sur une bride circulaire latérale 7 de la première partie 1A qui est pourvue d'un épaulement interne 8 sur lequel vient buter le joint d'étanchéité 6. Le bouchon 1B quant à lui comporte un taraudage interne 9 vissé sur le filetage 5 de la première partie 1A et une bride circulaire 10 qui retient le joint d'étanchéité 6, la bride latérale 7 de la première partie 1A étant encastrée entre ce taraudage 9 et cette bride circulaire 10 du bouchon 1B.

Selon le mode de liaison utilisée du bouchon 1B et de la première partie 1A, le taraudage peut être réalisé sur la première partie 1A et le filetage sur le bouchon 1B, cette variante entrant également dans le cadre de l'invention.

## Revendications

1. Bâche (1) destinée à contenir un dispositif de mesure d'un compteur de fluide, en particulier d'eau, dont la sortie ou l'entrée de fluide est réalisée au moyen d'un canal (3) connecté directement latéralement à l'intérieur de la bâche puis dévié vers le bas en une forme de U (3A) pour être finalement vertical et coaxial à la bâche, **caractérisée en ce qu'**elle est en matière plastique et constituée d'une première (1A) et d'une seconde (1B) parties assemblées après moulage.

2. Bâche selon la revendication précédente, **caractérisée en ce que** ladite seconde partie (1B) forme la base de ladite forme de U (3A) du canal et est assemblée à ladite première partie (1A) constituant le reste de la bâche.

3. Bâche selon la revendication précédente, **caractérisée en ce que** ladite seconde partie (1B) est constituée d'un bouchon de forme circulaire fermant ladite base de la forme en U (3A) du canal.

4. Bâche selon la revendication précédente, **caractérisé en ce que** ledit bouchon (1B) est vissé sur ladite première partie (1A).

5. Bâche selon la revendication précédente, **caractérisé en ce que** ledit bouchon (1B) est taraudé et est vissé sur un filetage correspondant (5) réalisé sur ladite première partie (1A).
